Europäisches Patentamt

European Patent Office

Office européen des brevets

(19)

(11) Veröffentlichungsnummer: **0 361 337**
**A2**

(12) # EUROPÄISCHE PATENTANMELDUNG

(21) Anmeldenummer: **89117600.0**

(22) Anmeldetag: **23.09.89**

(51) Int. Cl.⁵: **C09D 7/12 , C09D 5/02 , C08F 220/18**

(30) Priorität: **28.09.88 AT 2388/88**

(43) Veröffentlichungstag der Anmeldung:
**04.04.90 Patentblatt 90/14**

(84) Benannte Vertragsstaaten:
**BE CH DE ES FR GB IT LI NL SE**

(71) Anmelder: **Vianova Kunstharz Aktiengesellschaft**

**A-8402 Werndorf(AT)**

(72) Erfinder: **Rauch-Puntigam, Harald, Dr.**
**Hochsteingasse 21**
**A-8010 Graz(AT)**
Erfinder: **Morre, Peter**
**Triesterstrasse 125**
**A-8073 Feldkirchen(AT)**
Erfinder: **Staritzbichler, Werner, Dr.**
**Im Hoffeld 6**
**A-8046 Graz(AT)**

(54) **Verwendung von Acrylatcopolymerisaten als Additive für wässrige anionische Lacksysteme.**

(57) Die Erfindung betrifft die Verwendung von hydroxylfunktionellen Acrylatcopolymerisaten als Additive für wäßrige anionische Lacksysteme zur Verhinderung von Oberflächenstörungen.

Die Acrylatcopolymerisate weisen neben mit Basen neutralisierbaren Carboxylgruppen in ausgewählter Menge aus (Meth)acrylsäurehydroxyethyl- bzw. (Meth)acrylsäurehydroxypropylestern stammende Hydroxylgruppen auf.

Die Additive werden in einer Menge von 0,1 bis 2,0 Gew.-%, berechnet auf Feststoff und bezogen auf den Feststoffanteil des Bindemittels im Lack, zugesetzt.

EP 0 361 337 A2

EP 0 361 337 A2

## Verwendung von Acrylatcopolymerisaten als Additive für wäßrige anionische Lacksysteme.

Die Erfindung betrifft die Verwendung hydroxylfunktioneller Acrylatcopolymerisate als Additive für wäßrige anionische Lacksysteme zur Verhinderung von Oberflächenstörungen.

Bekanntlich zeigen wäßrige Systeme bei der Filmbildung eine erhöhte Empfindlichkeit gegenüber Fremdstoffen im Lackmaterial oder auf dem zu lackierenden Substrat, die sich in Form von Kratern, Dellen oder ähnlichen Oberflächenstörungen äußert. Diese Empfindlichkeit kann bei Grundierungen durch Erhöhung des Pigmentanteils vermieden oder zumindest verringert werden. Dieser Weg ist jedoch in vielen Fällen, insbesonders bei dekorativen Lackierungen nicht gangbar, da er zu einer Verminderung der Beständigkeitseigenschaften bzw. zu Einbußen bei den optischen Eigenschaften führt.

Eine Herabsetzung der Empfindlichkeit dieser Systeme gegen Oberflächenstörungen kann auch durch Zusatz von grenzflächenaktiven Substanzen erfolgen. Häufig tritt dabei wegen einer zu großen Unverträglichkeit der Additive mit dem Lackmaterial eine zu starke Anreicherung der Additive im Bereich der Lackoberfläche ein, wodurch die Zwischenschichthaftung, d.h. die Haftung weiterer Lackschichten, wesentlich verschlechtert wird.

Zur Vermeidung einer extremen Unverträglichkeit werden in der gegenwärtigen Praxis bei Lacken auf der Basis von Carboxylatgruppen aufweisenden wasserlöslichen Lackbindemitteln polymere Zusatzmittel eingesetzt, die Copolymere von sauren Monomeren und neutralen Estermonomeren, hauptsächlich von (Meth)acrylmonomeren, dar stellen. Durch eine entsprechende Abstimmung des Säureanteils kann eine optimale Systemwirksamkeit erreicht werden, doch besteht auch in diesem Fall eine große Empfindlichkeit gegenüber Überdosierung, die unmittelbar zu den beschriebenen Haftungsschwierigkeiten führt. Abgesehen davon werden bei der Notwendigkeit höherer Säureanteile, Eigenschaften der Lacke bzw. der Lackbindemittel, wie die Hydrophilie, die Verdünnbarkeit, das Viskositätsverhalten oder die Verträglichkeit, in unerwünschter Weise verändert.

Es wurde nun gefunden, daß bei Lacksystemen, die als Bindemittel Carboxylgruppen tragende und durch Salzbildung mit Basen in eine wasserverdünnbare Form übergeführte Harze enthalten, die obengenannten Oberflächenstörungen und Haftungsschwierigkeiten überwunden werden können, wenn die als Additiv eingesetzten Acrylatcopolymerisate neben den Säuregruppen in ausgewählter Menge aus (Meth)acrylsäurehydroxyethyl- bzw. (Meth)acrylsäurehydroxypropylestern stammende Hydroxylgruppen aufweisen.

Die vorliegende Erfindung betrifft demgemäß die Verwendung von hydroxylfunktionellen Acrylatcopolymerisaten, welche aus

(A) 5 bis 15 Gew.-% (Meth)acrylsäure und/oder Maleinsäure und/oder deren Halbester mit Alkanolen, welche 1 bis 14 C-Atome aufweisen,

(B) 5 bis 50 Gew.-% (Meth)acrylsäurehydroxyethylester und/oder (Meth)acrylsäurehydroxypropylester

(C) 25 bis 90 Gew.-% (Meth)acrylsäurealkylester, deren Alkylreste 1 bis 12 C-Atome aufweisen, und gegebenenfalls

(D) bis zu 10 Gew.-% Styrol bestehen, wobei die Summe der Prozentzahlen der Komponenten (A) bis (D) 100 ergeben muß, und welche eine Säurezahl von 15 bis 170 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren Carboxylgruppen mindestens zu 50 % mit einer organischen Base, vorzugsweise mit einem sekundären oder tertiären Alkylamin oder Alkanolamin, dessen Alkyl- oder Alkanolreste 1 bis 3 C-Atome aufweisen, neutralisiert sind, als Additive für wäßrige anionische Lacksysteme zur Verhinderung von Oberflächenstörungen.

Durch die erfindungsgemäßen Additive werden sowohl Filmstörungen, die durch die Oberflächenspannung der wäßrigen Phase im Lack bedingt sind, als auch die Probleme bei der Zwischenschichthaftung, d.h. bei der Haftung weiterer Lackschichten, durch eine andere Verteilung und Wirksamkeit der hydrophilen Gruppen wesentlich vermindert.

Die Acrylatcopolymerisate mit der im Patentanspruch angegebenen Zusammensetzung und Charakteristik werden in üblicher Weise durch Lösungspolymerisation in wassermischbaren oder mindestens wassertoleranten Lösemitteln, wie niedrigen Alkoholen, vorzugsweise Butanol oder Glykolmono- oder -diethern, hergestellt. Es können auch Gemische dieser Lösemittel, z. B. Butanol mit Methoxypropanol, verwendet werden.

Die Acrylatcopolymerisate werden durch folgende Kennwerte charakterisiert:
Säurezahl: 15 bis 170 mg KOH/g, vorzugsweise 30 bis 120 mg KOH/g,
Hydroxylzahl: 15 bis 250 mg KOH/g, vorzugsweise 20 bis 200 mg KOH/mg.

2

Die Carboxylgruppen der Acrylatcopolymerisate werden mindestens zu 50 % mit einer organischen Base neutralisiert. Vorzugsweise erfolgt die Neutralisation mit sekundären oder tertiären Alkyl- oder Alkanolaminen, deren Alkyl- bzw. Alkanolreste 1 bis 3 C-Atome aufweisen. Beispiele für solche Neutralisationsmittel sind Diethylamin, Triethylamin, Di-n-Propylamin, Dimethylethanolamin, Diisopropanolamin u ä.

Die Acrylatcopolymerisate werden gleichzeitig mit der Zugabe des Neutralisationsmittels oder nach der Neutralisation mit Wasser auf den für die Anwendung vorteilhaften Festkörpergehalt verdünnt. Üblicherweise erfolgt der Einsatz als 50 ± 15 %ige Lösung.

Die erfindungsgemäßen Additive werden in einer Menge von 0,1 bis 2,0 Gew.-%, vorzugsweise von 0,3 bis 1,0 Gew.-%, berechnet auf Feststoff und bezogen auf den Feststoffanteil des Bindemittels im Lack, eingesetzt.

Die erfindungsgemäßen Additive werden für alle Typen von Lacken, die mit anionischen, wasserverdünnbaren, auch als "wasserlöslich" bezeichneten, Bindemitteln formuliert werden, verwendet. Diese Bindemittel können Kondensationsharze vom Polyester- oder Alkydharztyp, Copolymerisate aus alpha, beta-ungesättigten Monomeren oder Additionsharze, wie modifizierte Epoxidharzester, sein. Sie tragen üblicherweise eine ausreichende Zahl von Carboxylgruppen, durch deren Neutralisation mit Basen das Bindemittel in die wasserverdünnbare Form übergeführt wird.

Die Prüfung der erfindungsgemäßen Additive erfolgt vorteilhaft durch Einmischen geringer Mengen einer störenden Substanz in den verarbeitungsfertigen Klarlack des Bindemittels. Als für diesen Test besonders gut geeignet haben sich styrol- bzw. vinyltoluolmodifizierte Alkydharze, gelöst in Lackbenzin und anderen organischen Lösemitteln, erwiesen. Der verunreinigte Klarlack wird auf entfettetes Stahlblech gespritzt und unter den für das Bindemittel erforderlichen Bedingungen gehärtet. Die Prüfung der Zwischenschichthaftung erfolgt zweckmäßig nach Überspritzen des gehärteten Testfilms mit einem Einbrennlack, der auch in organischen Lösemitteln vorliegen kann, und einer Gitterschnittprüfung nach Aushärtung und gegebenenfalls Korrosionsbelastung des Films.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiele 1 - 3

Herstellung der Additive

| Beispiel 1: | | |
|---|---|---|
| 18,0 Tle | n-Butanol | Teil I |
| 18,0 Tle | Methoxypropanol | |
| 63,0 Tle | Acrylsäure-2-ethyl-hexylester | Teil II |
| 21,0 Tle | Acrylsäurebutylester | |
| 6,0 Tle | Acrylsäure-2-hydroxy-ethylester | |
| 10,0 Tle | Methacrylsäure | |
| 1,0 Tl | Di-tert.-butylperoxid | Teil III |
| 13,0 Tle | Diethylenglycol-dimethylether | |
| 15,0 Tle | Triethylamin | Teil IV |
| | Wasser | Teil V |

Teil I wird in das Reaktionsgefäß gefüllt und auf 115 °C erhitzt. Teil II und Teil III werden innerhalb von 5 Stunden bei 115 - 120 °C gleichmäßig in den Reaktor gelassen. Nach Beendigung der Zugaben wird 2 Stunden bei 120 °C gehalten und das Polymerisationsende durch Festkörperbestimmung kontrolliert.

Nach Erreichen des theoretischen Festkörpers wird bei 40 °C Teil IV zugesetzt (der pH-Wert einer 5%igen wäßrigen Prüflösung beträgt 11,0).

Anschließend wird mit Teil V der Festkörper auf 50 % eingestellt.

3

| Beispiel 2: | | |
|---|---|---|
| 18,0 Tle | n-Butanol | Teil I |
| 18,0 Tle | Methoxypropanol | |
| 5,0 Tle | Styrol | Teil II |
| 77,0 Tle | Methacrylsäurebutylester | |
| 8,0 Tle | Methacrylsäure-2-hydroxy-ethylester | |
| 10,0 Tle | Acrylsäure | |
| 1,0 Tl | Di-tert.-butylperoxid | Teil III |
| 6,5 Tle | n-Butanol | |
| 6,5 Tle | Methoxypropanol | |
| 13,0 Tle | Dimethylethanolamin | Teil IV |
| | Wasser | Teil V |

Reaktionsführung analog Beispiel 1; nach Zugabe von Teil IV beträgt der pH-Wert einer 5%igen wäßrigen Prüflösung 10,0.

Der Endfestkörper wird wieder mit Wasser (Teil V) auf 50 % eingestellt.

| Beispiel 3: | | |
|---|---|---|
| 18,0 Tle | n-Butanol | Teil I |
| 18,0 Tle | Methoxypropanol | |
| 5,0 Tle | Methacrylsäuremethylester | Teil II |
| 73,0 Tle | Acrylsäurebutylester | |
| 12,0 Tle | Acrylsäure-2-hydroxy-ethylester | |
| 10,0 Tle | Acrylsäure | |
| 1,0 Tl | Di-tert.-Butylperoxid | Teil III |
| 6,5 Tle | n-Butanol | |
| 6,5 Tle | Methoxypropanol | |
| 15,0 Tle | Triethylamin | Teil IV |
| | Wasser | Teil V |

Reaktionsführung analog Beispiel 1; nach Zugabe von Teil IV beträgt der pH-Wert einer 5%igen wäßrigen Prüflösung 10,0.

Der Endfestkörper wird wieder mit Wasser (Teil V) auf 50 % eingestellt.

| Vergleichsbeispiel 1 (V1): | | |
|---|---|---|
| 18,0 Tle | n-Butanol | Teil I |
| 18,0 Tle | Methoxypropanol | |
| 82,0 Tle | Acrylsäurebutylester | Teil II |
| 18,0 Tle | Acrylsäure | |
| 1,0 Tl | Di-tert.-butylperoxid | Teil III |
| 6,5 Tle | n-Butanol | |
| 6,5 Tle | Methoxypropanol | |
| 15,0 Tle | Triethylamin | Teil IV |
| 30,0 Tle | Wasser | Teil V |
| 15,0 Tle | Triethylamin | Teil VI |

Die Polymerisationsdurchführung erfolgt wie in Beispiel 1. Nach der Teilneutralisation bei 40° C mit Teil IV wird zunächst Teil V zugegeben und dann mit Teil VI ein pH-Wert von 8,5 eingestellt.

Prüfung der erfindungsgemäßen Additive

4

(a) Herstellung der Testlösung I

Ein handelsübliches wasserverdünnbares Lackbindemittel auf Basis eines gesättigten Polyesters wird, gegebenenfalls nach Neutralisation und Zugabe eines Melaminharzes als Vernetzungskomponente gemäß Merkblatt, auf einen Festkörpergehalt von 25 % mit deionisiertem Wasser verdünnt und mit einer 10%igen Lösung eines handelsüblichen hochstyrolisierten Alkydharzes versetzt.

Beispielsweise kann folgende Rezeptur verwendet werden:

| 120 Tle | RESYDROL VWA 11, 70 % |
|---|---|
| 6 Tle | Dimethylethanolamin (DMEA) |
| 50 Tle | Monoethylenglykolmonobutylether (BUGL) |
| 17 Tle | Hexamethoxymethylmelamin (HMMM) |
| 208 Tle | Wasser |
| 5 Tle | VIALKYD AV 462 / 60%ig in Testbenzin, verdünnt mit BUGL/Xylol(1:1) auf einen Festkörpergehalt von 10 %. |

Die Lösung hat eine Auslaufzeit nach DIN 53211/20°C von 30 - 40 Sekunden. (RESYDROL und VIALKYD sind registrierte Warennamen der VIANOVA KUNSTHARZ AG).

(b) Herstellung der Testlösung II

Ein handelsübliches wasserverdünnbares kurzöliges Alkydharz wird, gegebenenfalls nach Neutralisation und Zugabe eines Melaminharzes als Vernetzungskomponente gemäß Merkblatt, auf einen Festkörpergehalt von 25 % mit deionisiertem Wasser verdünnt und mit einer 10%igen Lösung eines handelsüblichen hochstyrolisierten Alkydharzes versetzt.

Beispielsweise kann folgende Rezeptur verwendet werden:

| 120 Tle | RESYDROL VWA 5400, 70 % |
|---|---|
| 6 Tle | DMEA |
| 50 Tle | BUGL |
| 17 Tle | HMMM |
| 243 Tle | Wasser |
| 5 Tle | VIALKYD AV 462 / 60%ig in Testbenzin, verdünnt mit BUGL/Xylol(1:1) auf einen Festkörpergehalt von 10 %. |

Die Lösung hat eine Auslaufzeit nach DIN 53211/20°C von 30 - 40 Sekunden.

(c) Prüfung der erfindungsgemäßen Additive auf Oberflächenstörungen und auf die Haftung weiterer Lackschichten

Die in der nachfolgenden Tabelle 1 angegebenen Mischungen werden auf entfettete Stahlbleche aufgespritzt und 30 Minuten bei 160°C gehärtet. Die resultierende Trockenfilmstärke soll 35 ± 5 μm betragen.

Die Filmfläche wird in Bezug auf die Krater- bzw. Dellenbildung beurteilt (0 : keine Krater, 1 : einzelne Krater; 2 : deutliche Kraterneigung, 3 : starke Kraterbildung).

Auf den Film der gehärteten Testlösungen wird ein praxisgerechter, ofentrocknender Industrielack, z.B. auf Basis eines in organischen Lösemitteln vorliegenden fremdvernetzenden Acrylatharzes (75 Teile Festharz), eines Melaminharzes (25 Teile Festharz) und 80 Teilen Titandioxyd von Rutil-Typ, aufgebracht und eingebrannt.

Nach 2-stündiger Lagerung im Normklima wird die Zwischenschichthaftung durch eine Gitterschnittprüfung nach DIN 53 151 geprüft. Eine weitere Gitterschnittprüfung erfolgt nach einem Tropentest (240 Stunden, 40°C, 100 % rel. Luftfeuchtigkeit) und nach anschließender 2-stündiger Lagerung im Normklima. Beurteilt wurde die Haftung des Decklackes auf dem Klarlack.

Tabelle 1:

| Testmischungen und Prüfergebnisse. | | | | | |
|---|---|---|---|---|---|
| Als Klarlack werden 405 g der Testlösung I bzw. 441 g der Testlösung II (jeweils 100 g Festharz) mit der angegebenen Menge Additiv gemischt (Gew.-%, berechnet auf Feststoff des Additivs und bezogen auf den Feststoffanteil des Bindemittels n den Testlösungen I und II). | | | | | |
| Testlösung | Additiv | | Kraterbildung Note | Gitterschnittwerte Gt | |
| | gemäß Beisp. | Gew.-% | | nach 2 h Narmklima | nach 240 h Tropentest |
| I | ohne Additiv | | 3 | 0 | 1 |
| I | 1 | 0,6 | 1 | 0 | 1-2 |
| I | 2 | 1 | 0 | 0 | 2 |
| I | 3 | 0,5 | 0 | 0 | 1 |
| I | (V1) | 0,5 | 0 | 1-2 | 5 |
| II | ohne Additiv | | 2-3 | 0 | 1 |
| II | 1 | 0,6 | 0 | 0 | 1-2 |
| II | 2 | 1 | 1 | 0 | 2 |
| II | 3 | 0,5 | 1 | 0 | 2 |
| II | (V1) | 0,5 | 0 | 1 | 4 |

## Ansprüche

1. Verwendung von hydroxylfunktionellen Acrylatcopolymerisaten, welche aus

(A) 5 bis 15 Gew.-% (Meth)acrylsäure und/oder Maleinsäure und/oder deren Halbester mit Alkanolen, welche 1 bis 14 C-Atome aufweisen,

(B) 5 bis 50 Gew.-% (Meth)acrylsäurehydroxyethylester und/oder (Meth)acrylsäurehydroxypropylester

(C) 25 bis 90 Gew.-% (Meth)acrylsäurealkylester, deren Alkylreste 1 bis 12 C-Atome aufweisen, und gegebenenfalls

(D) bis zu 10 Gew.-% Styrol

bestehen, wobei die Summe der Prozentzahlen der Komponenten (A) bis (D) 100 ergeben muß, und welche eine Säurezahl von 15 bis 170 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren Carboxylgruppen mindestens zu 50 % mit einer organischen Base, vorzugsweise mit einem sekundären oder tertiären Alkylamin oder Alkanolamin, dessen Alkyl- oder Alkanolreste 1 bis 3 C-Atome aufweisen, neutralisiert sind, als Additive für wäßrige anionische Lacksysteme zur Verhinderung von Oberflächenstörungen.

2. Verwendung von Acrylatcopolymerisaten nach Anspruch 1 in einer Menge von 0,1 bis 2,0 Gew.-%, vorzugsweise von 0,3 bis 1,0 Gew.-%, berechnet auf Feststoff und bezogen auf den Feststoffanteil des Bindemittels im Lack, für den in Anspruch 1 angegebenen Zweck.